# EUROPÄISCHE PATENTSCHRIFT

(11) **EP 4 431 878 B1**
(45) Veröffentlichungstag und Bekanntmachung des Hinweises auf die Patenterteilung: **28.01.2026**
(21) Anmeldenummer: 23179584.0
(22) Anmeldetag: 15.06.2023
(51) Int. Cl.: F16H 61/00, G01D 18/00, F16H 59/70, F16H 61/28, G01D 5/14

(54) **SENSORANORDNUNG**
SENSOR ASSEMBLY
AGENCEMENT DE CAPTEURS

(30) Priorität: 14.03.2023 DE 102023106246
(43) Veröffentlichungstag der Anmeldung: 18.09.2024
(73) Patentinhaber: KNORR-BREMSE Systeme für Nutzfahrzeuge GmbH, 80809 München (DE)
(72) Erfinder: HUBER, Christian, 80937 München (DE); SHELKE, Sagar Vitthal, 81925 München (DE)

(56) Entgegenhaltungen:
- EP-A1- 3 663 722
- DE-A1- 102014 010 601
- DE-A1- 19 855 358
- US-A1- 2010 188 074
- US-A1- 2017 276 740
- US-A1- 2019 085 875

## Beschreibung

Die vorliegende Erfindung betrifft eine Sensoranordnung zur Erfassung einer Position eines auf einer Übertragungsstrecke parallel zu einer Übertragungsrichtung mittels eines elektrischen Stellmotors verschiebbar vorgesehenen Übertragungselementes sowie einen Betätigungsmechanismus und einen Kupplungssteller. Weiter betrifft die Erfindung ein Verfahren zum Betrieb einer solchen Sensoranordnung sowie ein Verfahren zum Kalibrieren einer solchen Sensoranordnung.

Aus der EP 3 663 722 A1 sind eine Vorrichtung und ein Verfahren zur Kalibrierung eines magnetischen Sensors für die Bestimmung einer Position eines Gebermagneten entlang einer Strecke bekannt.

In Fahrzeugen sind diverse Sensoranordnungen zur Erfassung von verschiebbar vorgesehenen Elementen denkbar. Vorzugsweise sind dabei robuste und langlebige Anordnungen vorzusehen.

Das Einsatzgebiet der Erfindung erstreckt sich insbesondere auf den Nutzfahrzeugbau. Ein zentrales Merkmal vieler Schaltgetriebe von Nutzfahrzeugen, insbesondere für den Nah- und Verteilerverkehr, Fernverkehr sowie auch für den Überland- und Reisebusverkehr ist die Gruppenbauweise mit einer Vielzahl von Gangstufen. Dieser Aufbau wird bei Nutzfahrzeugen zunehmend für automatisierte Schaltgetriebe (AMT) verwendet. Schaltgetriebe für Nutzfahrzeuge können prinzipiell unterschiedliche Automatisierungsgrade aufweisen. Dabei können je nach Ausführung der Anfahrvorgang, die Betätigung der Schaltkupplung sowie die Gangwahl automatisiert erfolgen. Bei Handschaltgetrieben ist keine dieser Vorgänge automatisiert, bei teilautomatisierten Schaltgetrieben ist einer dieser Vorgänge automatisiert und bei den hier insbesondere interessierenden vollautomatischen Schaltgetrieben erfolgen alle Vorgänge automatisiert. Hieraus ergibt sich die Notwendigkeit, geeignete Betätigungseinrichtungen für eine automatisierte Anfahrkupplung, ein automatisiertes Kuppeln beim Schalten sowie eine automatisierte Gangwahl und Motormanagement einzusetzen. Von zentraler Bedeutung für die Schaltautomatisierung ist die genaue Erfassung der Position von verwendeten Schaltelementen zur Optimierung und Effizienzsteigerung des automatisierten Schaltablaufes. Dabei befindet sich die Sensorik üblicherweise im Bereich des Getriebes. Für die Erfassung der Kupplungsposition ist eine Sensierung des Kupplungsaktuators erforderlich. Je nach Übersetzung müssen hier beispielsweise Wege bis 80 mm erfasst werden.

Daher ist es Aufgabe der Erfindung, eine entsprechende Sensoranordnung zur Verfügung zu stellen. Weiter ist es Aufgabe der Erfindung, einen Betätigungsmechanismus und einen Kupplungssteller sowie ein Verfahren zum Betrieb und ein Verfahren zum Kalibrieren einer solchen Sensoranordnung zur Verfügung zu stellen.

Diese Aufgabe wird durch die Gegenstände der unabhängigen Ansprüche gelöst. Vorteilhafte Weiterbildungen der Erfindung sind Gegenstand der Unteransprüche.

Es ist eine Sensoranordnung zur Erfassung einer Position eines auf einer Übertragungsstrecke parallel zu einer Übertragungsrichtung verschiebbar vorgesehenen Übertragungselementes vorgesehen, wobei die Sensoranordnung Folgendes aufweist:
- ein Indikatorelement, das dazu ausgebildet ist, auf dem Übertragungselement vorgesehen zu werden und dazu ausgebildet ist, zusammen mit dem Übertragungselement parallel zur Übertragungsrichtung verschoben zu werden,
- Erfassungselemente, die jeweils dazu ausgebildet sind, ein Ausgabesignal auszugeben, das eine Ermittlung der Position des Indikatorelements zumindest entlang eines Abschnitts der Übertragungsrichtung ermöglicht, wenn sich das Indikatorelement in einem Erfassungsbereich des jeweiligen Erfassungselements befindet, wobei die Erfassungselemente in Übertragungsrichtung zueinander beabstandet angeordnet sind und mindestens ein erstes Erfassungselement und ein zweites Erfassungselement aufweisen, und
- eine Auswerteeinheit, die dazu ausgebildet ist, die Position des Übertragungselements auf der Übertragungsstrecke aus den Ausgabesignalen der Erfassungselemente zu ermitteln, wobei
die Sensoranordnung dazu ausgebildet ist, vor der Ermittlung der Position des Übertragungselements auf der Übertragungsstrecke durch die Auswerteeinheit, die Ausgabesingale der Erfassungselemente einer Korrektur zu unterziehen.

Nachfolgend wird neben dem Begriff "Ausgabesignal" auch der Begriff "Ausgangssignal" für die von den Erfassungselementen ausgegebenen Signale verwendet. Diese Begriffe sind, sofern keine andere Erläuterung vorhanden ist, als Synonyme zu betrachten.

Das Übertragungselement ist vorzugsweise mittels eines elektrischen Stellmotors auf der Übertragungsstrecke parallel zu der Übertragungsrichtung verschiebbar vorgesehenen.

Vorzugsweise ist das erste Erfassungselement in einem geringeren Abstand zum Stellmotor parallel zur Übertragungsrichtung positioniert als das zweite Erfassungselement.

Die Wechselwirkung zwischen Indikatorelement und den Erfassungselementen, die das jeweilige Ausgabesignal beeinflusst, erfolgt vorzugsweise berührungslos, so dass alleine die Anwesenheit des Indikatorelements im Erfassungsbereich des jeweiligen Erfassungselements dafür sorgt, dass das Erfassungselement ein entsprechendes Ausgangssignal bzw. Ausgabesignal ausgibt. Auf diese Weise ist ein möglichst verschleißfreier Betrieb der Sensoranordnung möglich.

Die Übertragungsrichtung ist vorzugsweise als Gerade ausgebildet.

Die Übertragungsstrecke ist vorzugsweise ein Teilstück der Übertragungsrichtung und definiert durch eine erste Endposition und eine zweite Endposition, die in Übertragungsrichtung von der ersten Endposition beabstandet ist. Das Übertragungselement ist dann zwischen diesen beiden Endpositionen verschiebbar vorgesehen, wobei die Erfindung den Zweck erfüllt, die Position des Übertragungselements auf dieser Übertragungsstrecke zu bestimmen. Dabei kann die Position des Übertragungselements beispielsweise durch einen bestimmten Abschnitt des Übertragungselements und dessen aktuelle Position auf der Übertragungsstrecke definiert sein. Befindet sich der bestimmte Abschnitt des Übertragungselements beispielsweise in der ersten Endposition, dann entspricht dies der Position des Übertragungselements auf der Übertragungsstrecke. Das Übertragungselement ist dann auch in der ersten Endposition. Befindet sich der bestimmte Abschnitt des Übertragungselements beispielsweise in der zweiten Endposition, dann entspricht dies der Position des Übertragungselements auf der Übertragungsstrecke. Das Übertragungselement ist dann auch in der zweiten Endposition. Positionen des Übertragungselements zwischen den beiden Endpositionen ergeben sich durch eine Position des bestimmten Abschnitts des Übertragungselements zwischen den beiden Endpositionen.

Das Übertragungselement ist vorzugsweise als länglich erstrecktes Element, wie eine Stange oder ein Stab ausgebildet, wobei sich das Übertragungselement weiter vorzugsweise in Übertragungsrichtung erstreckt. Insbesondere ist eine Achse des Übertragungselements, wie eine Stabachse, parallel zu der Übertragungsrichtung orientiert. Der bestimmte Abschnitt des Übertragungselements, der zur Bestimmung der Position des Übertragungselements verwendet wird, kann insbesondere ein Stabende sein.

Das erste Erfassungselement kann dasjenige Erfassungselement sein, das parallel zur Übertragungsrichtung der ersten Endposition am nächsten liegt. D.h., dass sich das Indikatorelement im Erfassungsbereich des ersten Erfassungselements befindet, wenn sich das Übertragungselement in der ersten Endposition der Übertragungsstrecke befindet.

Der Stellmotor kann insbesondere entgegen der Übertragungsrichtung hinter der ersten Endposition positioniert sein. Alternativ oder zusätzlich kann der Stellmotor so positioniert sein, dass sämtliche Erfassungselemente entlang der Übertragungsrichtung vor oder hinter dem Stellmotor positioniert sind. Es kann aber auch vorgesehen sein, dass sich in Übertragungsrichtung Erfassungselemente vor und hinter dem Stellmotor befinden. Dann kann sich die Beschreibung der Erfindung insbesondere auf Erfassungselemente beziehen, die auf einer der beiden Seiten des Stellmotors gelegen sind. Dies ist jedoch nicht zwingend.

Vorzugsweise sind die Erfassungselemente so entlang der Übertragungsrichtung angeordnet, dass das erste Erfassungselement einen Abstand zur Übertragungsrichtung aufweist, der größer ist als ein Abstand zur Übertragungsrichtung des in Übertragungsrichtung nachgelagerten zweiten Erfassungselementes. Der Abstand des ersten und zweiten Erfassungselements zur Übertragungsrichtung wird dabei vorzugsweise von dem Erfassungselement, beispielsweise von einem Mittelpunkt des Erfassungselements, als Senkrechte auf die Übertragungsrichtung gemessen. Vorzugsweise ist der Abstand entlang einer zweiten Richtung definiert, die senkrecht zu der Übertragungsrichtung orientiert ist. Insbesondere wird durch diese Anordnung erreicht, dass der Abstand zwischen dem Indikatorelement und dem ersten Erfassungselement größer ist als der Abstand zwischen dem Indikatorelement und dem zweiten Erfassungselement, wenn sich das Indikatorelement im jeweiligen Erfassungsbereich befindet. Dabei ergibt sich, durch einen entsprechend vergrößerten Abstand, dass auch der Abstand des ersten Erfassungselements zu dem Stellmotor vergrößert wird. Auf diese Weise kann erreicht werden, dass eine Beeinflussung durch magnetische Störfelder insbesondere des ersten Erfassungselements reduziert wird, die beispielsweise durch elektrische Ströme des Stellmotors oder von Hochstromleitungen auf der Platine hervorgerufen werden. Die Erfassung des Indikatorelements und somit die Ermittlung der Position des Übertragungselements insbesondere im Erfassungsbereich des ersten Erfassungselements wird dadurch verbessert. Insbesondere kann vorgesehen sein, dass sich der Abstand sämtlicher Erfassungselemente in Übertragungsrichtung entlang der zweiten Richtung reduziert. D.h. das erste Erfassungselement kann hier den größten Abstand aufweisen und das in Übertragungsrichtung letzte Erfassungselement kann hier den kleinsten Abstand aufweisen. Weiter kann vorgesehen sein, dass das erste Erfassungselement und das zweite Erfassungselement oder sämtliche Erfassungselemente in einer Ebene liegen, die durch die Übertragungsrichtung und die zweite Richtung definiert ist. Es kann aber auch vorgesehen sein, dass einzelne Erfassungselemente oder sämtliche Erfassungselemente, von dieser Ebene beabstandet sind. Daraus ergibt sich ein Versatz quer zur Übertragungsrichtung, wie er weiter unten beschrieben wird.

Vorzugsweise weist das erste Erfassungselement im Vergleich zu dem zweiten Erfassungselement eine höhere Messempfindlichkeit auf, um das Indikatorelement in seinem Erfassungsbereich zu erfassen. Gerade wenn das erste Erfassungselement einen größeren Abstand zur Übertragungsrichtung aufweist, wie vorstehend erläutert, kann so ein möglicher Nachteil in der Erfassung des Indikatorelements durch das erste Erfassungselement gegenüber dem zweiten Erfassungselement zumindest teilweise kompensiert werden.

Es kann aber auch vorgesehen sein, dass der Abstand, den das erste und das zweite Erfassungselement zur Übertragungsrichtung in der zweiten Richtung aufweisen oder den sämtliche Erfassungselemente aufweisen, konstant ist. D.h. in der zweiten Richtung können zwei der mehr Erfassungselemente den gleichen Abstand zur Übertragungsrichtung entlang der zweiten Richtung aufweisen.

Vorzugsweise sind das erste Erfassungselement und das zweite Erfassungselement in einer gemeinsamen Ebene angeordnet, wobei die Ebene gegenüber der Übertragungsrichtung geneigt ist. Auf diese Weise ist eine einfache konstruktive Gestaltung der Sensoranordnung möglich. Besonders bevorzugt können sämtliche Erfassungselemente auf der gemeinsamen Ebene angeordnet sein. Die gemeinsame Ebene wird vorzugsweise von der Übertragungsrichtung bzw. einer in Übertragungsrichtung orientierten Gerade durchstoßen.

Vorzugsweise ist die gemeinsame Ebene durch ein Trägerelement gebildet, auf dem das erste Erfassungselement und das zweite Erfassungselement angeordnet sind. Dies ermöglicht eine vereinfachte Montage bzw. Demontage des ersten und zweiten Erfassungselements, da so lediglich das Trägerelement demontiert werden muss.

Allgemein ist es möglich sämtliche Erfassungselemente auf einem gemeinsamen Trägerelement vorzusehen, so dass damit die Montage und Demontage weiter erleichtert wird. Ein solches Trägerelement kann darüber hinaus auch eine gemeinsame Ebene bilden in der sämtliche Erfassungselemente angeordnet sind. Alternativ oder zusätzlich kann ein solches Trägerelement oder die durch das Trägerelement gebildete Ebene gegenüber der Übertragungsrichtung geneigt sein.

Vorzugsweise ist das Trägerelement durch eine Leiterplatte (PCB) gebildet oder es weist vorzugsweise eine Leiterplatte (PCB) auf. Diese Leiterplatte kann die nötigen Signalleitungen aufweisen, über die die Ausgabesignale der Erfassungselemente zu der Auswerteeinheit geleitet werden.

Die Leiterplatte kann auch weitere Leitungen führen. Insbesondere können auch Leitungen darüber geführt werden, die elektrischen Strom an den Stellmotor liefern. Dabei kann vorgesehen sein, dass Zonen um die Erfassungselemente herum, die frei von diesen Leitungen bleiben müssen, um einen störungsfreien Betrieb der Sensoranordnung zu ermöglichen, abgerundet ausgebildet sind, um diese Zonen möglichst groß zu gestalten oder um Bauraum bzw. Platz auf der PCB für andere Bauteile zu schaffen.

Vorzugsweise ist mindestens eines der Erfassungselemente quer zur Übertragungsrichtung versetzt angeordnet. Dies kann bedeuten, dass zumindest ein Erfassungselement nicht in Übertragungsrichtung fluchtend angeordnet ist. Insbesondere kann vorgesehen sein, dass sich die versetzte Anordnung auf eine dritte Richtung bezieht, die sowohl senkrecht zu der Übertragungsrichtung als auch zu der oben erwähnten zweiten Richtung orientiert ist, wobei die Übertragungsrichtung und die zweite Richtung ebenfalls zueinander senkrecht orientiert sind. Insbesondere kann eine Anordnung der Erfassungselemente gewählt werden, die wiederum einen möglichst großen Abstand zu elektrischen Bauteilen, wie dem Stellmotor, ermöglicht, wodurch die Störung der Erfassungselemente durch solche Bauteile bzw. deren magnetische Störfelder minimiert werden kann. Vorzugsweise ist das Indikatorelement dann so gestaltet, dass es von jedem Erfassungselement erfasst werden kann, ganz gleich ob das jeweilige Erfassungselement mit der Übertragungsrichtung fluchtet oder nicht. Dies kann dadurch gelöst sein, dass das Indikatorelement in seiner Erstreckung quer zur Übertragungsrichtung entsprechend dimensioniert wird, so dass es beim Durchfahren der Übertragungsstrecke sämtliche Erfassungsbereiche überstreicht. Besonders bevorzugt sind sämtliche Erfassungselemente quer zur Übertragungsrichtung versetzt angeordnet.

Es kann alternativ auch vorgesehen sein, dass in der dritten Richtung kein Versatz zwischen den Erfassungselementen vorgesehen ist.

Das erste Erfassungselement und das zweite Erfassungselement weisen insbesondere jeweils eine Erfassungsrichtung auf. Die Erfassungsrichtung ist als Zentralrichtung des Erfassungsbereichs des jeweiligen Erfassungselements definiert und beschreibt letztlich, in welche Richtung der jeweilige Erfassungsbereich und damit das jeweilige Erfassungselement ausgerichtet sind.

Vorzugsweise sind die Erfassungsrichtungen des ersten Erfassungselements und des zweiten Erfassungselements zueinander parallel orientiert. Insbesondere kann vorgesehen sein, dass die Erfassungsrichtungen sämtlicher Erfassungselemente zueinander parallel orientiert sind. Dies ist insbesondere von Vorteil, wenn das erste Erfassungselement und das zweite Erfassung oder sämtliche Erfassungselemente in derselben Ebene angeordnet sind, so dass dann die Einbaulagen der entsprechenden Erfassungselemente gleich sind. Dadurch kann sich auch ein vergleichbares Ausgangssignal bzw. Ausgabesignal in Reaktion auf das Indikatorelement im jeweiligen Erfassungsbereich ergeben, wodurch der Applikationsaufwand der Sensoranordnung reduziert wird.

Vorzugsweise weist der Erfassungsbereich der Erfassungselemente einen linearen Zusammenhang zwischen Ausgabesignal und Position des Indikatorelements auf. D.h., dass, solange sich das Indikatorelement in dem jeweiligen Erfassungsbereich befindet, ein lineares Ausgabesignal durch das entsprechende Erfassungselement ausgegeben wird, das die Position des Indikatorelements innerhalb des Erfassungsbereichs beschreibt. Damit kann der Erfassungsbereich des Erfassungselements auch als derjenige Bereich definiert werden, der ein Ausgabesignal gemäß einem linearen Zusammenhang zwischen Ausgabesignal und Position des Indikatorelements erzeugt.

Bevorzugt kann vorgesehen sein, dass die Erfassungselemente über deren Ausgabesignal den Winkel ausgeben, mit dem das Indikatorelement entlang der Übertragungsrichtung zu dem jeweiligen Erfassungselement positioniert ist. Dabei können die Erfassungselemente so konfiguriert sein, dass sie lediglich Winkel ausgeben, die einen minimalen und/oder maximalen Betrag nicht übersteigen. Dieser minimale und/oder maximale Betrag kann so gewählt sein, dass die Rohsignale, aus denen der Winkel bestimmt wird, nur für Positionen des Indikatorelements innerhalb des jeweiligen Erfassungsbereichs verarbeitet werden. Sollte sich das Indikatorelement nicht in diesem Erfassungsbereich befinden, so ist vorzugsweise vorgesehen, die jeweiligen Ausgabesignale auf Grenzwerte zu setzen, wie nachfolgend beschrieben wird.

Nachfolgend wird der Begriff "oberer Grenzwert" verwendet für den in der Anmeldung allgemein auch der Begriff "erster Grenzwert" verwendet wird.

Nachfolgend wird außerdem der Begriff "unterer Grenzwert" verwendet für den in der Anmeldung allgemein auch der Begriff "zweiter Grenzwert" verwendet wird.

Es ist nicht zwingend so, dass der obere Grenzwert größer als der untere Grenzwert bzw. der erste Grenzwert größer als der zweite Grenzwert ist. Erfindungsgemäß kann auch sein, dass der obere Grenzwert kleiner als der untere Grenzwert bzw. der erste Grenzwert kleiner als der zweite Grenzwert ist.

Die Sensoranordnung ist dazu ausgebildet, dass das Ausgabesignal eines jeden Erfassungselements auf einen ersten bzw. oberen Grenzwert gesetzt wird, wenn sich das Indikatorelement in Übertragungsrichtung außerhalb des Erfassungsbereichs des entsprechenden Erfassungselements befindet und dass das Ausgabesignal eines jeden Erfassungselements auf einen zweiten bzw. unteren Grenzwert gesetzt wird, wenn sich das Indikatorelement entgegen der Übertragungsrichtung außerhalb des Erfassungsbereichs des entsprechenden Erfassungselements befindet. Der untere Grenzwert ist dabei bevorzugt Null Der obere Grenzwert entspricht vorzugsweise einem Wert, der der Breite des Erfassungsbereichs des entsprechenden Erfassungselements entspricht. Alternativ kann vorgesehen sein, dass der untere und der obere Grenzwert von Null verschiedene Werte aufweisen. Der untere Grenzwert ist dann bevorzugt negativ, der obere Grenzwert ist dann bevorzugt positiv, oder umgekehrt. Die Werte zwischen dem unteren und oberen Grenzbereich sind vorzugsweise im Wesentlichen linear, unabhängig davon, ob ein Grenzwert Null ist oder nicht.

Die Sensoranordnung ist dazu ausgebildet, die Ausgabesignale der einzelnen Erfassungselemente zu addieren, wodurch ein Gesamtsignal gebildet wird, das dazu geeignet ist, die Position des Übertragungselements auf der Übertragungsstrecke zu ermitteln. Die Addition der Ausgabesignale erfolgt bevorzugt in der Auswerteeinheit, die weiter vorzugsweise daraus die Position des Indikatorelements und daraus die Position des Übertragungselements oder gleich direkt die Position des Übertragungselements auf der Übertragungsstrecke bestimmt.

Sind die Erfassungsbereiche so angeordnet, dass sie nahtlos ineinander übergehen, so kann entlang der Übertragungsrichtung die Position des Indikatorelements und damit die Position des Übertragungselements auf der Übertragungsstrecke wie folgt bestimmt werden:
Das Übertragungselement wird bei dieser Beschreibung durch den Stellmotor in Übertragungsrichtung bewegt, wobei die Bewegung in einer Position begonnen wird, die der ersten Endposition des Übertragungselements entspricht. In dieser Position befindet sich das Indikatorelement am Beginn des Erfassungsbereichs des ersten Erfassungselements, so dass das Ausgabesignal des ersten Erfassungselements dem unteren Grenzwert entspricht. Dieser kann Null sein. Auch das Ausgabesignal der weiteren Erfassungselemente entspricht in diesem Fall deren unterem Grenzwert. Dieser kann jeweils Null sein. Alternativ kann der untere Grenzwert auch einem von Null verschiedenen Wert entsprechen. Insbesondere kann vorgesehen sein, dass das Ausgabesignal eines Erfassungselements zwischen dem unteren und dem oberen Grenzwert abhängig von der Position des Indikatorelements stetig steigend oder fallend verläuft und insbesondere linear von der Position des Indikatorelements abhängig ist.

Ein Gesamtausgabesignal gebildet durch Addition der einzelnen Ausgabesignale kann somit Null sein oder allgemein der Summe der unteren Grenzwerte entsprechen, was die Auswerteeinheit als Position auf der Übertragungsstrecke interpretiert, wobei sie dazu ausgebildet ist, diesen Wert des Gesamtausgabesignals als Position in der ersten Endposition zu interpretieren. Dies kann die Position des Indikatorelements bzw. direkt des Übertragungselements sein. Wird das Übertragungselement nun in Übertragungsrichtung bewegt, so durchfährt das Indikatorelement den Erfassungsbereich des ersten Erfassungselements, wobei dieses, vorzugsweise linear zur Position innerhalb des Erfassungsbereichs ein Ausgabesignal ausgibt. Dieses entspricht der Position des Indikatorelements innerhalb des Erfassungsbereichs des ersten Erfassungselements. Die Ausgabesignale der weiteren Erfassungselemente bleiben zu diesem Zeitpunkt auf dem jeweiligen unteren Grenzwert, da das Indikatorelement im Erfassungsbereich des ersten Erfassungselements ist. Diese Ausgabesignale können Null sein. Das Gesamtausgabesignal kann nun wieder durch Addition der einzelnen Ausgabesignale bestimmt werden. Gegenüber der ersten Endposition hat sich das Gesamtausgabesignal nun um den Anteil erhöht, den das erste Erfassungselement nun entsprechend der Position des Indikatorelements im Erfassungsbereich ausgibt. Dieser Signalwert wird nun von der Auswerteeinheit so interpretiert, dass das Indikatorelement oder eben direkt das Übertragungselement eine erste Wegstrecke in Richtung Übertragungsrichtung zurückgelegt hat. Durchfährt das Indikatorelement den Erfassungsbereich des ersten Erfassungselements komplett und verlässt diesen in Übertragungsrichtung, so wird das Ausgabesignal des ersten Erfassungselements auf den oberen Grenzwert gesetzt. Das Ausgabesignal des nächsten Erfassungselements, dessen Erfassungsbereich nun von dem Indikatorelement durchfahren wird gibt nun entsprechend der Position des Indikatorelements innerhalb dieses Erfassungsbereichs ein Ausgabesignal aus, wobei die weiteren, in Übertragungsrichtung positionierten Erfassungselemente, die bzw. deren Erfassungsbereiche noch nicht durchfahren wurden, nach wie vor ihren unteren Grenzwert ausgeben. Das Gesamtausgabesignal, das die Auswerteeinheit nun durch Addition der einzelnen Ausgabesignale ermittelt, entspricht nun einer Position des Übertragungselements entlang der Übertragungsstrecke, die innerhalb des Erfassungsbereichs des aktuell durchfahrenen Erfassungselements liegt. Dabei liefert der obere Grenzwert, den nun das erste Erfassungselement ausgibt, einen Offset, der in der Addition dem bereits durchfahrenen Abschnitt entspricht, den der Erfassungsbereich des ersten Erfassungselements abdeckt. Nach diesem Schema können nun alle Erfassungsbereiche der Erfassungselemente nach und nach durchfahren werden, wobei letztlich das Gesamtausgabesignal der Position des Indikatorelements bzw. des Übertragungselements entspricht. Ist die zweite Endposition der Übertragungsstrecke erreicht, sind vorzugsweise sämtlich Ausgabesignale der Erfassungselemente auf den jeweiligen oberen Grenzwert gestellt. Die Auswerteeinheit wertet die Summe dieser Ausgabesignale dann als maximalen Verfahrweg des Indikatorelements oder direkt des Übertragungselements und damit als Endposition.

Ist statt der hier beschriebenen Konfiguration vorgesehen, dass die Erfassungsbereiche nicht direkt aneinandergrenzen, sondern dass diese überlappen, so kann dies in der Auswerteeinheit entsprechend berücksichtigt werden. In diesem Fall würden mindestens zwei Erfassungselemente gleichzeitig ein Ausgabesignal ausgeben, wenn sich das Indikatorelement in dem Überlappungsbereich beider Erfassungsbereiche befindet. Dies kann beispielsweise durch entsprechendes Setzen der oberen bzw. unteren Grenzwerte der Erfassungselemente erfolgen oder durch eine entsprechend angepasste Auswertelogik, insbesondere auf Softwarebasis, berücksichtigt werden.

Die hier beschriebenen Bestimmungen der Position des Übertragungselements lassen sich auch auf andere Anordnungen von Erfassungselementen übertragen, die beabstandet entlang der Übertragungsrichtung angeordnet sind.

Vorzugsweise sind das erste Erfassungselement und das zweite Erfassungselement dazu ausgebildet, mit dem Indikatorelement nach dem Hall-Prinzip in Wechselwirkung zu treten, um das jeweilige Ausgabesignal auszugeben. Besonders bevorzugt sind sämtliche Erfassungselemente entsprechend ausgebildet. Die Erfassungselemente sind dabei bevorzugt als Hall-Chips ausgebildet, die zur entsprechenden Wechselwirkung mit dem Indikatorelement ausgebildet sind, das magnetische Eigenschaften aufweist, um von den Hall-Chips im jeweiligen Erfassungsbereich erfasst werden zu können Die Hall-Chips können dabei insbesondere als Bestandteil der oben erwähnten Leiterplatte (PCB) vorgesehen sein.

Generell kann das Indikatorelement als Magnet ausgebildet sein, wobei zur besseren Erfassung durch die Erfassungselemente der Magnet als Ringmagnet oder als Segmentmagnet vorgesehen sein kann. Vorzugsweise ist der Ringmagnet so orientiert, dass er koaxial zu der Erfassungsrichtung dieses Erfassungselements orientiert ist, wenn er diesem Erfassungselement direkt gegenüber steht.

Vorzugsweise ist mindestens eines der Erfassungselemente dazu ausgebildet, ein vorbestimmtes Ausgangssignal bzw. Ausgabesignal auszugeben, wenn sich das Indikatorelement in dessen Erfassungsbereich befindet. Das Ausgangssignal kann beispielsweise der Winkel sein, unter dem das Indikatorelement zum jeweiligen Erfassungselement positioniert ist. Insbesondere kann vorgesehen sein, dass das Indikatorelement beim Durchfahren des Erfassungsbereichs parallel zur Übertragungsrichtung, d.h. in Übertragungsrichtung und/oder entgegen der Übertragungsrichtung, einen vorbestimmten Signalverlauf erzeugt. Ein solcher vorbestimmter Signalverlauf erlaubt dann der Sensoranordnung zu bestimmen, in welchem Erfassungsbereich sich das Indikatorelement gerade befindet und somit, welches Ausgangssignal tatsächlich die Position des Indikatorelements innerhalb des Erfassungsbereichs ausgibt bzw. auf Basis welchen Ausgangssignals die Position des Indikatorelements innerhalb des Erfassungsbereichs innerhalb des Erfassungsbereichs ermittelt werden kann. D.h. Signalverläufe anderer Erfassungselemente können ignoriert, verworfen oder auf vorbestimmte Werte, wie den ersten bzw. zweiten Grenzwert, gesetzt werden. Auf diese Weise kann vermieden werden, dass Ausgangssignale, die nicht durch das Indikatorelement im entsprechenden Erfassungsbereich hervorgerufen wurden, nicht bei der Positionsbestimmung herangezogen werden. Dies ist insbesondere dann vorteilhaft, wenn andere störende Einflüsse, wie bspw. Magnetfelder aus anderen Quellen vorhanden sind, die ebenfalls ein Ausgangssignal eines Erfassungselements hervorrufen würden. Somit kann hierdurch realisiert werden, die Ausgabesingale der Erfassungselemente einer Korrektur zu unterziehen.

Vorzugsweise ist die Sensoranordnung dazu ausgebildet, anhand des vorbestimmten Ausgangssignals bzw. Ausgabesignals oder anhand von Rohsignalen zu erkennen, in welchem Erfassungsbereich sich das Indikatorelement befindet. Dies kann insbesondere dadurch realisiert sein, indem das Indikatorelement beim Durchfahren des jeweiligen Erfassungsbereichs ein bestimmtes, der Sensoranordnung bekanntes Ausgangssignal erzeugt. Es kann aber auch vorgesehen sein, dass das Indikatorelement einen beim Durchfahren des jeweiligen Erfassungsbereichs bekannten Signalverlauf erzeugt. Dieser kann im Ausgangssignal vorhanden sein oder auch in durch das Erfassungsmittel erstellten Rohsignalen. Ist das Indikatorelement beispielsweise ungleichmäßig geformt so ruft es beim Durchfahren des Erfassungsbereichs entsprechend ungleichmäßige Rohsignale und/oder Ausgangssignale hervor. Diese Ungleichmäßigkeit kann durch die Sensoranordnung, insbesondere durch die Auswerteeinheit, erkannt werden, so dass eindeutig feststellbar ist, in welchem Erfassungsbereich sich das Indikatorelement gerade befindet. Rohsingale können dabei insbesondere Signale und/oder Daten sein, aus denen das Ausgangssignal generiert wird.

Vorzugsweise ist die Sensoranordnung dazu ausgebildet, die Ausgangssignale bzw. Ausgabesignale der Erfassungselemente in deren Erfassungsbereich sich das Indikatorelement nicht befindet, zu verwerfen oder auf einen vorbestimmten Wert zu setzen. Insbesondere erfolgt das Verwerfen oder das Setzen auf einen vorbestimmten Wert durch die Auswerteeinheit.

Vorzugsweise ist ferner ein Betätigungsmechanismus vorgesehen, der ein Übertragungselement aufweist, das in einer Übertragungsrichtung verschiebbar vorgesehen ist, wobei der Betätigungsmechanismus weiter eine Sensoranordnung wie oben beschrieben aufweist, wobei das Indikatorelement der Sensoranordnung mit dem Übertragungselement verbunden ist und das Übertragungselement dazu ausgebildet ist, entlang der Übertragungsrichtung verschoben zu werden, wodurch eine mit dem Betätigungsmechanismus in Wirkverbindung stehende Vorrichtung betätigt wird.

Vorzugsweise weist der Betätigungsmechanismus einen, insbesondere elektrischen, Stellmotor auf, der dazu ausgebildet ist, das Übertragungselement entlang der Übertragungsrichtung zu verschieben.

Vorzugsweise ist ferner ein Kupplungssteller vorgesehen, der ein Übertragungselement aufweist, das in einer Übertragungsrichtung verschiebbar vorgesehen ist, wobei der Kupplungssteller weiter eine Sensoranordnung wie oben beschrieben aufweist, wobei das Indikatorelement der Sensoranordnung mit dem Übertragungselement verbunden ist und das Übertragungselement dazu ausgebildet ist, entlang der Übertragungsrichtung verschoben zu werden, wodurch eine Kupplung betätigt wird. Vorzugsweise weist der Kupplungssteller einen, insbesondere elektrischen, Stellmotor auf, der dazu ausgebildet ist, das Übertragungselement entlang der Übertragungsrichtung zu verschieben.

Vorzugsweise ist ein Verfahren vorgesehen, das zum Betrieb einer Sensoranordnung wie oben beschrieben geeignet ist. Das Verfahren umfasst die folgenden Schritte:
- Erfassen eines Indikatorelements in einem Erfassungsbereich eines von mindestens zwei Erfassungselementen in dem sich das Indikatorelement befindet;

Ausgeben eines Ausgabesignals, das der Position des Indikatorelements innerhalb des Erfassungsbereichs in dem sich das Indikatorelement befindet entspricht;
Korrigieren der Ausgabesignale der Erfassungselemente in deren Erfassungsbereichen sich das Indikatorelement nicht befindet, indem diese Ausgabesignale auf einen vorbestimmten Grenzwert gesetzt werden;
Bestimmen der Position des Indikatorelements aus den Ausgabesignalen der einzelnen Erfassungselemente; und
Bestimmen einer Position eines auf einer Übertragungsstrecke parallel zu einer Übertragungsrichtung verschiebbar vorgesehenen Übertragungselementes aus der Position des Indikatorelements.

Alternativ ist auch möglich, die Position des Übertragungselementes direkt aus den Ausgabesignalen der einzelnen Erfassungselemente zu bestimmen.

Dieses Verfahren zum Betrieb einer oben beschriebenen Sensoranordnung weist vorzugsweise folgende Schritte auf:
- Erfassen eines Indikatorelements in einem Erfassungsbereich eines von mindestens zwei Erfassungselementen in dem sich das Indikatorelement befindet;

Ausgeben eines Ausgabesignals, das der Position des Indikatorelements innerhalb des Erfassungsbereichs in dem sich das Indikatorelement befindet entspricht;
Korrigieren der Ausgabesignale der Erfassungselemente in deren Erfassungsbereichen sich das Indikatorelement nicht befindet, indem diese Ausgabesignale auf einen vorbestimmten Grenzwert gesetzt werden;
Bestimmen der Position des auf der Übertragungsstrecke parallel zu der Übertragungsrichtung verschiebbar vorgesehenen Übertragungselementes aus den Ausgabesignalen der einzelnen Erfassungselemente.

Für einen Fachmann sind weitere Verfahrensschritte und Ausprägungen des Verfahrens aus den oben beschriebenen Merkmalen der dort beschriebenen Gegenstände ableitbar.

Vorzugsweise ist weiter ein Verfahren wie oben beschrieben vorgesehen. Das Verfahren umfasst die folgenden Schritte zum Kalibrieren der Sensoranordnung:
Bewegen eines Indikatorelements entlang der Übertragungsrichtung und Erfassen der Ausgabesignale der Erfassungselemente;
Festlegen der Erfassungsbereiche anhand der Ausgabesignale;
Setzen von Grenzwerten für die Ausgabesignale, wenn sich das Indikatorelement nicht im festgelegten Erfassungsbereich befindet.

Bevorzugt erfolgt das Festlegen der Erfassungsbereiche und der Grenzwerte für die Ausgabesignale so, dass der Erfassungsbereich und der durch das Indikatorelement zurückgelegte Weg einen linearen Zusammenhang aufweisen. Dies gilt insbesondere dann, wenn das Erfassungselement einen Winkel zwischen dem Indikatorelement und dem entsprechenden Erfassungselement, wie einen magnetischen Winkel, erfasst. Sobald der Zusammenhang zwischen dem zurückgelegten Weg des Indikatorelements und des Ausgabesignals des entsprechenden Erfassungselements nicht mehr linear ist, wird der Grenzwert gesetzt, so dass das Ausgabesignal nun einen Wert ausgibt, der einer Grenze des Erfassungsbereichs entspricht. Diese kann eine in Übertragungsrichtung erste oder zweite Grenze, d.h. ein Anfang bzw. ein Ende des Erfassungsbereichs beschreiben.

Für einen Fachmann sind weitere Verfahrensschritte und Ausprägungen des Verfahrens aus den oben beschriebenen Merkmalen der dort beschriebenen Gegenstände ableitbar.

Nachfolgend wird die Erfindung anhand bevorzugter Ausführungsformen unter Bezugnahme auf die beigefügten Zeichnungen erläutert.

Im Einzelnen zeigt
- Fig. 1: eine Seitenansicht einer bevorzugten Ausführungsform der Sensoranordnung,
- Fig. 2: eine Draufsicht auf ein Trägerelement mit zur Übertragungsrichtung versetzt angeordneten Erfassungselementen und
- Fig. 3: einen Signalverlauf der Ausgangssignale bzw. Ausgabesignale von vier Erfassungselementen einer Sensoranordnung, wie sie beispielsweise in Fig. 1 und 2 gezeigt ist.

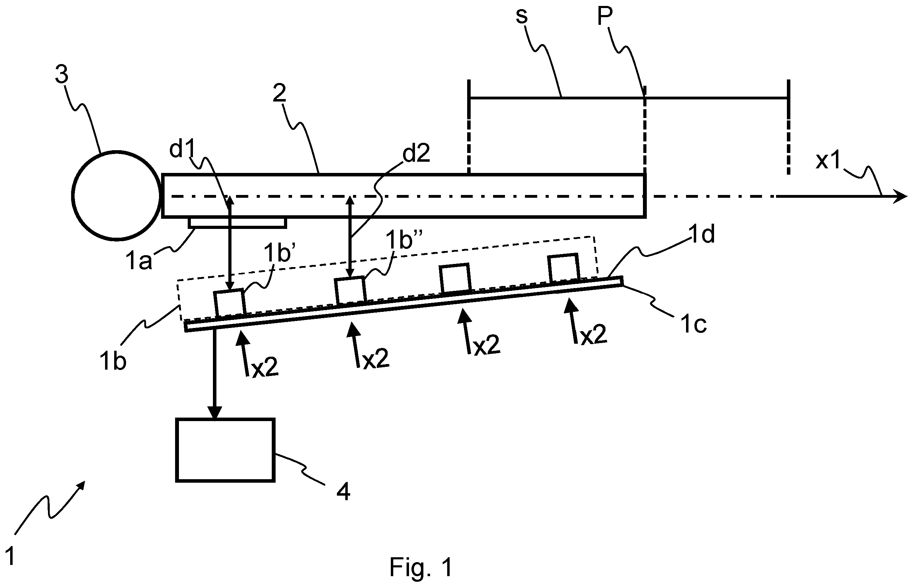

**Fig. 1** zeigt eine Seitenansicht einer bevorzugten Ausführungsform der Sensoranordnung.

Es ist eine Sensoranordnung 1 in Verbindung mit einem Übertragungselement 2 gezeigt, das in eine Übertragungsrichtung x1 verschoben werden kann. Für die Verschiebung ist hier optional ein elektrischer Stellmotor 3 vorgesehen. Das Übertragungselement 2 ist hier als Druckstange ausgebildet, die beispielsweise mit einer Kupplung wechselwirken kann, um die Kupplung aus- bzw. einzurücken. Die Druckstange erstreckt sich dabei in Übertragungsrichtung x1.

Gezeigt ist ferner eine Übertragungsstrecke s, die sich zwischen einer ersten linken Endposition und einer zweiten rechten Endposition parallel zur Übertragungsrichtung x1 erstreckt. In dem gezeigten Ausführungsbeispiel ist eine Position P des Übertragungselements 2 als die Position des in der Zeichnung rechts gelegenen Endes des Übertragungselements 2 definiert, wobei hier eine Position P des Übertragungselements 2 zwischen den beiden Endpositionen der Übertragungsstrecke s gezeigt ist.

An dieser Stelle sei darauf hingewiesen, dass die Zeichnungen nicht maßstabsgetreu zu verstehen sind, sondern lediglich das Prinzip der Erfindung erläutern sollen. Beispielsweise sind Stellmotor 3 und Übertragungselement 2 in Fig. 1 unmittelbar nebeneinander dargestellt. Dies ist jedoch nicht zwingend der Fall. Der Stellmotor 3 kann das Übertragungselement 2 auch über ein Getriebe in Bewegung versetzen, das hier nicht gezeigt ist. Auch ist das Übertragungselement 2 hier mit einer Position P dargestellt, die sich inmitten der Übertragungsstrecke s befindet.

Die gezeigte Sensoranordnung 1 dient zur Ermittlung der Position P des auf der Übertragungsstrecke s mittels des elektrischen Stellmotors 3 parallel zu der Übertragungsrichtung x1 verschiebbar vorgesehenen Übertragungselementes 2, wobei die Sensoranordnung 1 Folgendes aufweist:
- ein Indikatorelement 1a das auf dem Übertragungselement 2 vorgesehen ist und zusammen mit dem Übertragungselement 2 parallel zur Übertragungsrichtung x1 verschoben werden kann,
- Erfassungselemente 1b, die jeweils dazu ausgebildet sind, ein Ausgabesignal auszugeben, das eine Ermittlung der Position des Indikatorelements 1a zumindest entlang eines Abschnitts der Übertragungsrichtung x1 ermöglicht, wenn sich das Indikatorelement 1a in einem Erfassungsbereich des jeweiligen Erfassungselements 1b befindet, wobei die Erfassungselemente 1b in Übertragungsrichtung x1 zueinander beabstandet angeordnet sind und mindestens ein erstes Erfassungselement 1b' und ein zweites Erfassungselement 1b" aufweisen, wobei das erste Erfassungselement 1b' in einem geringeren Abstand zum Stellmotor 3 parallel zur Übertragungsrichtung x1 positioniert ist als das zweite Erfassungselement 1b", und
- eine Auswerteeinheit 4, die dazu ausgebildet ist, die Position P des Übertragungselements 2 auf der Übertragungsstrecke s aus den Ausgabesignalen der Erfassungselemente 1b zu ermitteln.

Insbesondere arbeitet die gezeigte Sensoranordnung 1 hier so, dass die Erfassungselemente 1b das Indikatorelement 1a erfassen, sobald dieses sich im jeweiligen Erfassungsbereich des jeweiligen Erfassungselements 1b befindet. In Folge dessen geben die Erfassungselemente 1b ein entsprechendes Ausgabesignal aus. Die Auswerteeinheit 4 ermittelt dann aus den Ausgabesignalen die Position P des Übertragungselements 2.

Die Sensoranordnung ist dazu ausgebildet, vor der Ermittlung der Position P des Übertragungselements 2 auf der Übertragungsstrecke s durch die Auswerteeinheit 4, die Ausgabesingale der Erfassungselemente 1b einer Korrektur zu unterziehen.

Der Stellmotor 3 ist hier entgegen der Übertragungsrichtung x1 hinter den Erfassungselementen 1b angeordnet.

Die Erfassungselemente 1b sind hier als Hall-Chips ausgebildet und in einer gemeinsamen Ebene 1d angeordnet. Die Ebene 1d ist dabei von einem Trägerelement, nämlich einer Leiterplatte 1c (PCB), gebildet. Entsprechend ist das Indikatorelement 1a magnetisch ausgebildet bzw. als Magnet, bevorzugt als Ringmagnet, ausgebildet, damit die Erfassungselemente 1b in Reaktion auf die Erfassung des Indikatorelements 1a ein entsprechendes Ausgabesignal ausgeben können, wenn sich das Indikatorelement 1a in einem Erfassungsbereich eines Erfassungselements 1b befindet oder diesen bei Verschiebung entlang der Übertragungsrichtung x1 durchfährt.

Die Erfassungselemente 1b weisen eine Erfassungsrichtung x2 auf, die als Zentralrichtung des Erfassungsbereichs des jeweiligen Erfassungselements 1b definiert ist. Diese beschreibt letztlich, in welche Richtung der jeweilige Erfassungsbereich und damit das jeweilige Erfassungselement 1b ausgerichtet sind. In diesem Fall sind sämtliche Erfassungselemente 1b bzw. deren Erfassungsrichtungen x2 parallel zueinander ausgerichtet. Ferner sind die Ausrichtungen der Erfassungselemente 1b bzw. der Erfassungsrichtungen x2 senkrecht zu der Ebene 1d orientiert, die durch die Leiterplatte 1c gebildet ist.

Die Ebene 1d ist hier gegenüber der Übertragungsrichtung x1 derart geneigt, dass sich ein Abstand d1 des ersten Übertragungselements 1b' zur Übertragungsrichtung x1 ergibt, der größer ist als ein Abstand d2 des zweiten Übertragungselements 1b" zur Übertragungsrichtung x1 bzw. in diesem Beispiel: als ein Abstand sämtlicher weiterer Übertragungselemente 1b zur Übertragungsrichtung x1. Die Abstände werden dabei in einer zweiten Richtung definiert, die in diesem Fall senkrecht zur Übertragungsrichtung x1 orientiert ist und gleichzeitig in der Zeichenebene nach unten verläuft.

D.h. dass der Luftspalt, zwischen dem Indikatorelement 1a und dem ersten Erfassungselement 1b' größer ist als der Luftspalt zwischen dem Indikatorelement 1a und dem zweiten Erfassungselement 1b". D.h., dass ein Ausgabesignal des ersten Erfassungselements 1b' in Reaktion auf das erfasste Indikatorelement 1a vergleichsweise schwächer ausfallen wird. Um dies zu kompensieren, kann die Empfindlichkeit des ersten Erfassungselements 1b' erhöht werden, das hier mit dem größten Abstand d1 zur Übertragungsrichtung x1 angeordnet ist. Auch ist denkbar, die Empfindlichkeit sämtlicher Erfassungselemente 1b entsprechend anzupassen, um eine Verschlechterung der Erfassung des Indikatorelements 1a durch den nun vergrößerten Abstand des jeweiligen Erfassungselements 1b zu Übertragungsrichtung x1 zu kompensieren.

Wie aus der Zeichnung ersichtlich, ist durch die Vergrößerung des Abstandes der Erfassungselemente 1b zur Übertragungsrichtung x1 erreicht worden, dass diese sich nun auch in einem größeren Abstand zum Stellmotor 3 befinden. Dies ist ein wesentlicher Vorteil dieser Anordnung, da so erreicht werden kann, dass ein störender Einfluss des Stellmotors 3 durch von diesem erzeugte magnetische Störfelder hier weniger stark auf die Erfassungselemente 1b und vor allem auf das erste Erfassungselement 1b', das entgegen der Übertragungsrichtung x1 dem Stellmotor 3 am nächsten liegt, wirkt.

Die Auswerteeinheit 4 empfängt sämtliche Ausgabesignale der Erfassungselemente 1b, die über die Leiterplatte 1c zur Auswerteeinheit 4 geführt werden und bestimmt daraus die Position P des Übertragungselements.

Bei der gezeigten Konfiguration sind die Erfassungsbereiche so angeordnet, dass sie nahtlos ineinander übergehen. Damit kann entlang der Übertragungsrichtung x1 die Position des Indikatorelements und damit die Position P des Übertragungselements 2 auf der Übertragungsstrecke x1 wie folgt bestimmt werden:

Das Übertragungselement 2 wird bei dieser Beschreibung durch den Stellmotor 3 in Übertragungsrichtung x1 bewegt, wobei die Bewegung in einer Position begonnen wird, die der ersten Endposition des Übertragungselements 2 entspricht. In dieser Position P befindet sich das Indikatorelement 1a am Beginn des Erfassungsbereichs des ersten Erfassungselements 1b', so dass das Ausgabesignal des ersten Erfassungselements 1b' dem unteren Grenzwert entspricht. Dieser kann Null sein. Auch das Ausgabesignal der weiteren Erfassungselemente 1b entspricht in diesem Fall deren unterem Grenzwert. Dieser kann jeweils Null sein. Alternativ kann der untere Grenzwert auch einem von Null verschiedenen Wert entsprechen. Insbesondere kann vorgesehen sein, dass das Ausgabesignal eines Erfassungselements 1b zwischen dem unteren und dem oberen Grenzwert abhängig von der Position des Indikatorelements 1a stetig steigend oder fallend verläuft und insbesondere linear von der Position des Indikatorelements 1a abhängig ist.

Ein Gesamtausgabesignal gebildet durch Addition der einzelnen Ausgabesignale durch die Auswerteeinheit 4 kann somit Null sein oder allgemein der Summe der unteren Grenzwerte entsprechen, was die Auswerteeinheit als Position auf der Übertragungsstrecke s interpretiert, wobei sie dazu ausgebildet ist, diesen Wert des Gesamtausgabesignals als Position P in der ersten Endposition zu interpretieren. Dies kann die Position des Indikatorelements bzw. direkt des Übertragungselements sein. Wird das Übertragungselement 2 nun in Übertragungsrichtung x1 bewegt, so durchfährt das Indikatorelement 1a den Erfassungsbereich des ersten Erfassungselements 1b', wobei dieses, vorzugsweise linear zur Position innerhalb des Erfassungsbereichs ein Ausgabesignal ausgibt. Dieses entspricht der Position des Indikatorelements 1a innerhalb des Erfassungsbereichs des ersten Erfassungselements 1b'. Die Ausgabesignale der weiteren Erfassungselemente 1b bleiben zu diesem Zeitpunkt auf dem jeweiligen unteren Grenzwert, da das Indikatorelement im Erfassungsbereich des ersten Erfassungselements ist. Diese Ausgabesignale können Null sein. Das Gesamtausgabesignal kann nun wieder durch Addition der einzelnen Ausgabesignale bestimmt werden. Gegenüber der ersten Endposition hat sich das Gesamtausgabesignal nun um den Anteil erhöht, den das erste Erfassungselement 1b' nun entsprechend der Position des Indikatorelements 1a im Erfassungsbereich ausgibt. Dieser Signalwert wird nun von der Auswerteeinheit 4 so interpretiert, dass das Indikatorelement 1a oder eben direkt das Übertragungselement 2 eine erste Wegstrecke in Übertragungsrichtung x1 zurückgelegt hat. Durchfährt das Indikatorelement 1a den Erfassungsbereich des ersten Erfassungselements 1b' komplett und verlässt diesen in Übertragungsrichtung x1, so wird das Ausgabesignal des ersten Erfassungselements auf den oberen Grenzwert gesetzt. Das Ausgabesignal des nächsten Erfassungselements 1b", dessen Erfassungsbereich nun von dem Indikatorelement durchfahren wird, gibt nun entsprechend der Position des Indikatorelements 1a innerhalb dieses Erfassungsbereichs ein Ausgabesignal aus, wobei die weiteren, in Übertragungsrichtung positionierten Erfassungselemente 1b, die noch nicht durchfahren wurden, nach wie vor ihren unteren Grenzwert ausgeben. Das Gesamtausgabesignal, das die Auswerteeinheit nun durch Addition der einzelnen Ausgabesignale ermittelt, entspricht folglich einer Position des Übertragungselements 2 entlang der Übertragungsstrecke s, die innerhalb des Erfassungsbereichs des aktuell durchfahrenen Erfassungselements 1b" liegt. Dabei liefert der obere Grenzwert, den nun das erste Erfassungselement 1b' ausgibt, einen Offset, der in der Addition dem bereits durchfahrenen Abschnitt entspricht, den der Erfassungsbereich des ersten Erfassungselements 1b' abdeckt. Nach diesem Schema können nun alle Erfassungsbereiche der Erfassungselemente 1b nach und nach durchfahren werden, wobei letztlich das Gesamtausgabesignal der Position des Indikatorelements 1a bzw. des Übertragungselements 2 entspricht. Ist die zweite Endposition der Übertragungsstrecke s erreicht, sind vorzugsweise sämtliche Ausgabesignale der Erfassungselemente 1b auf den jeweiligen oberen Grenzwert gestellt. Die Auswerteeinheit 4 wertet die Summe dieser Ausgabesignale dann als maximalen Verfahrweg des Indikatorelements 1a oder direkt des Übertragungselements 2 und damit als Endposition.

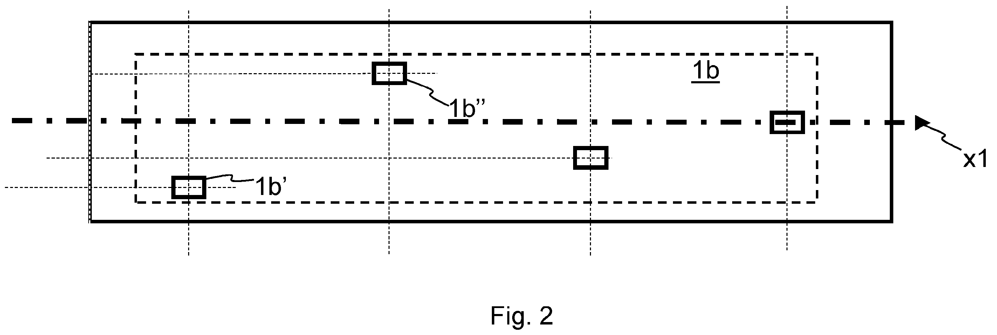

**Fig. 2** zeigt eine Draufsicht auf eine Anordnung von Erfassungselementen, bei der die Erfassungselemente zur Übertragungsrichtung versetzt angeordnet sind.

Die in dieser Zeichnung gezeigten Erfassungselemente 1b sind gegenüber der Übertragungsrichtung x1 versetzt angeordnet. Dies kann insbesondere auf die Konfiguration aus Fig. 1 angewandt werden. Dann würde die Blickrichtung in Fig. 2 entgegen der Erfassungsrichtung x2 aus Fig. 1 gerichtet sein. Der Versatz zur Übertragungsrichtung x1 bezieht sich hier auf eine dritte Richtung die senkrecht zur Zeichenebene der Fig. 1 orientiert ist.

In der gezeigten Konfiguration ist mindestens eines der Erfassungselemente 1b quer zur Übertragungsrichtung x1 versetzt angeordnet. Dies bedeutet, dass zumindest ein Erfassungselement 1b nicht in Übertragungsrichtung x1 fluchtend angeordnet ist. Insbesondere kann so eine Anordnung der Erfassungselemente gewählt werden, die wiederum einen möglichst großen Abstand zu elektrischen Bauteilen, wie dem Stellmotor 3, ermöglicht, wodurch die Störung der Erfassungselemente 1b durch von diesen Bauteilen erzeugte magnetische Störfelder minimiert werden kann. In der gezeigten Darstellung ist dies insbesondere durch die Anordnung des ersten Erfassungselements 1b' erreicht, dass durch den Versatz quer zur Übertragungsrichtung x1 einen vergrößerten Abstand zum Stellmotor 3 aufweist, verglichen zu einer Anordnung bei der kein Versatz vorliegt.

Das Indikatorelement 1a ist bei der gezeigten Konfiguration vorzugsweise so gestaltet, dass es von jedem Erfassungselement 1b erfasst werden kann, ganz gleich ob dieses mit der Übertragungsrichtung x1 fluchtet oder nicht. Dies kann durch ein entsprechend quer zur Übertragungsrichtung x1 breit gestaltetes Indikatorelement 1a erreicht werden, so dass es beim Durchfahren der Übertragungsstrecke sämtliche Erfassungsbereiche überstreicht.

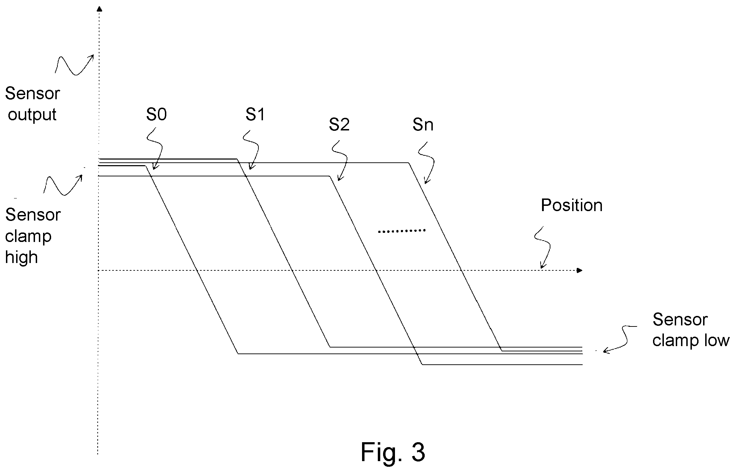

**Fig. 3** zeigt einen Signalverlauf der Ausgangssignale von vier Erfassungselementen einer Sensoranordnung, wie sie beispielsweise in Fig. 1 und 2 gezeigt ist.

Die Ausgangssignale der einzelnen Erfassungselemente sind mit S0, S1, S2 und Sn gekennzeichnet. Dabei können auch mehr als vier oder weniger als vier Erfassungselemente vorgesehen sein, wobei diese jeweils beabstandet zueinander entlang der Übertragungsrichtung angeordnet sind. Die Verläufe der Ausgangssignale S0, S1, S2 und Sn sind über der Position aufgetragen, die das Indikatorelement entlang der Übertragungsstrecke einnimmt. Dabei wird nach rechts eine fortschreitende Bewegung des Indikatorelements in Übertragungsrichtung beschrieben.

Zu erkennen ist, dass die Ausgangssignale nach oben und unten jeweils mit einem ersten bzw. zweiten Grenzwert gedeckelt sind und dazwischen einen linearen Bereich aufweisen, in dem ein linearer Zusammenhang zwischen der Position des Indikatorelements auf der Übertragungsstrecke und dem jeweiligen Ausgangssignal S0, S1, S2 und Sn besteht.

Die Erfassungselemente sind jeweils so entlang der Übertragungsstrecke angeordnet, dass jeweils nur ein Ausgangssignal S0, S1, S2 und Sn einem Wert aus dem linearen Bereich eines Erfassungselements entspricht, während die anderen Erfassungselemente Ausgangssignale S0, S1, S2 und Sn entsprechend ihrem ersten oder zweiten Grenzwert ausgeben.

Eine Auswerteeinheit 4, wie sie in Fig. 1 gezeigt ist, kann dann beispielsweise durch Addition der Ausgangssignale S0, S1, S2 und Sn ein Gesamtsignal erzeugen, das der Position des Indikatorelements auf der Übertragungsstrecke entspricht. Weiter kann daraus die Position des Übertragungselements bestimmt werden.

### BEZUGSZEICHENLISTE

- 1: Sensoranordnung
- 1a: Indikatorelement
- 1b: Erfassungselemente
- 1b': erstes Erfassungselement
- 1b": zweites Erfassungselement
- 1c: Leiterplatte
- 1d: Ebene
- 2: Übertragungselement
- 3: Stellmotor
- 4: Auswerteeinheit
- d1: Abstand
- d2: Abstand
- P: Position
- s: Übertragungsstrecke
- S0: Ausgangssignal
- S1: Ausgangssignal
- S2: Ausgangssignal
- Sn: Ausgangssignal
- x1: Übertragungsrichtung
- x2: Erfassungsrichtung

## Patentansprüche

1. Sensoranordnung (1) zur Erfassung einer Position (P) eines auf einer Übertragungsstrecke (s) parallel zu einer Übertragungsrichtung (x1) verschiebbar vorgesehenen Übertragungselementes (2), wobei die Sensoranordnung (1) Folgendes aufweist:
- ein Indikatorelement (1a), das dazu ausgebildet ist, auf dem Übertragungselement (2) vorgesehen zu werden und dazu ausgebildet ist, zusammen mit dem Übertragungselement (2) parallel zur Übertragungsrichtung (x1) verschoben zu werden,
- Erfassungselemente (1b), die jeweils dazu ausgebildet sind, ein Ausgabesignal auszugeben, das eine Ermittlung der Position des Indikatorelements (1a) zumindest entlang eines Abschnitts der Übertragungsrichtung (x1) ermöglicht, wenn sich das Indikatorelement (1a) in einem Erfassungsbereich des jeweiligen Erfassungselements (1b) befindet, wobei die Erfassungselemente (1b) in Übertragungsrichtung (x1) zueinander beabstandet angeordnet sind und mindestens ein erstes Erfassungselement (1b') und ein zweites Erfassungselement (1b") aufweisen, und
- eine Auswerteeinheit (4), die dazu ausgebildet ist, die Position (P) des Übertragungselements (2) auf der Übertragungsstrecke (s) aus den Ausgabesignalen der Erfassungselemente (1b) zu ermitteln,
wobei die Sensoranordnung (1) dazu ausgebildet ist, vor der Ermittlung der Position (P) des Übertragungselements (2) auf der Übertragungsstrecke (s) durch die Auswerteeinheit (4), die Ausgabesignale der Erfassungselemente (1b) einer Korrektur zu unterziehen,
wobei die Sensoranordnung (1) dazu ausgebildet ist, dass das Ausgabesignal eines jeden Erfassungselements (1b) auf einen ersten Grenzwert gesetzt wird, wenn sich das Indikatorelement (1a) in Übertragungsrichtung außerhalb des Erfassungsbereichs des entsprechenden Erfassungselements (1b) befindet, und dass das Ausgabesignal eines jeden Erfassungselements (1b) auf einen zweiten Grenzwert gesetzt wird, wenn sich das Indikatorelement (1a) entgegen der Übertragungsrichtung (x1) außerhalb des Erfassungsbereichs des entsprechenden Erfassungselements (1b) befindet, wobei der erste Grenzwert größer oder kleiner als der zweite Grenzwert sein kann, und
wobei die Sensoranordnung (1) dazu ausgebildet ist, die Ausgabesignale der einzelnen Erfassungselemente (1b) zu addieren, wodurch ein Gesamtsignal gebildet wird, das dazu geeignet ist, die Position (P) des Übertragungselements (2) auf der Übertragungsstrecke (s) zu ermitteln.

2. Sensoranordnung (1) nach Anspruch 1, wobei
das erste Erfassungselement (1b') und das zweite Erfassungselement (1b") jeweils eine Erfassungsrichtung (x2) aufweisen.

3. Sensoranordnung (1) nach Anspruch 2, wobei
die Erfassungsrichtungen (x2) des ersten Erfassungselements (1b') und des zweiten Erfassungselements (1b") zueinander parallel orientiert sind.

4. Sensoranordnung (1) nach einem der vorstehenden Ansprüche, wobei
der Erfassungsbereich der Erfassungselemente (1b) einen linearen Zusammenhang zwischen Ausgabesignal und Position des Indikatorelements (1a) aufweist.

5. Sensoranordnung (1) nach einem der vorstehenden Ansprüche, wobei
das erste Erfassungselement (1b') und das zweite Erfassungselement (1b") dazu ausgebildet sind, mit dem Indikatorelement (1a) nach dem Hall-Prinzip in Wechselwirkung zu treten, um das jeweilige Ausgabesignal auszugeben,

6. Sensoranordnung (1) nach einem der vorstehenden Ansprüche, wobei
das Indikatorelement (1a) als Magnet, insbesondere als Ringmagnet oder als Segmentmagnet, ausgebildet ist.

7. Sensoranordnung (1) nach einem der vorstehenden Ansprüche, wobei
mindestens eines der Erfassungselemente (1b) dazu ausgebildet ist, ein vorbestimmtes Ausgabesignal auszugeben, wenn sich das Indikatorelement (1a) in dessen Erfassungsbereich befindet.

8. Sensoranordnung (1) nach Anspruch 7, wobei
die Sensoranordnung (1) dazu ausgebildet ist, anhand des vorbestimmten Ausgabesignals zu erkennen, in welchem Erfassungsbereich sich das Indikatorelement (1a) befindet.

9. Sensoranordnung (1) nach Anspruch 8, wobei
die Sensoranordnung (1) dazu ausgebildet ist, die Ausgabesignale der Erfassungselemente (1b) in deren Erfassungsbereich sich das Indikatorelement (1b) nicht befindet, zu verwerfen oder auf einen vorbestimmten Wert zu setzen.

10. Betätigungsmechanismus mit einem Übertragungselement (2), das in einer Übertragungsrichtung (x1) verschiebbar vorgesehen ist, und einer Sensoranordnung (1) nach einem der Ansprüche 1 bis 9, wobei das Indikatorelement (1a) der Sensoranordnung (1) mit dem Übertragungselement (2) verbunden ist und das Übertragungselement (2) dazu ausgebildet ist, entlang der Übertragungsrichtung (x1) verschoben zu werden, wodurch eine mit dem Betätigungsmechanismus in Wirkverbindung stehende Vorrichtung betätigt wird.

11. Kupplungssteller mit einem Übertragungselement (2), das in einer Übertragungsrichtung (x1) verschiebbar vorgesehen ist, und einer Sensoranordnung (1) nach einem der Ansprüche 1 bis 9, wobei das Indikatorelement (1a) der Sensoranordnung (1) mit dem Übertragungselement (2) verbunden ist und das Übertragungselement (2) dazu ausgebildet ist, entlang der Übertragungsrichtung (x1) verschoben zu werden, wodurch eine Kupplung betätigt wird.

12. Verfahren zum Betrieb einer Sensoranordnung nach einem der Ansprüche 1 bis 9, mit folgenden Schritten:
Erfassen eines Indikatorelements (1a) in einem Erfassungsbereich eines von mindestens zwei Erfassungselementen (1b) in dem sich das Indikatorelement (1a) befindet;
Ausgeben eines Ausgabesignals, das der Position des Indikatorelements (1a) innerhalb des Erfassungsbereichs in dem sich das Indikatorelement (1a) befindet entspricht;
Korrigieren der Ausgabesignale der Erfassungselemente (1b) in deren Erfassungsbereichen sich das Indikatorelement (1a) nicht befindet, indem diese Ausgabesignale auf einen vorbestimmten Grenzwert gesetzt werden;
Bestimmen der Position des Indikatorelements aus den Ausgabesignalen der einzelnen Erfassungselemente und Bestimmen einer Position (P) eines auf einer Übertragungsstrecke (s) parallel zu einer Übertragungsrichtung (x1) verschiebbar vorgesehenen Übertragungselementes (2) aus der Position des Indikatorelements, oder
Bestimmen der Position (P) des auf der Übertragungsstrecke (s) parallel zu der Übertragungsrichtung (x1) verschiebbar vorgesehenen Übertragungselementes (2) aus den Ausgabesignalen der einzelnen Erfassungselemente.

13. Verfahren nach Anspruch 12, mit folgenden Schritten zum Kalibrieren der Sensoranordnung:
Bewegen eines Indikatorelements (1a) entlang der Übertragungsrichtung (x1) und Erfassen der Ausgabesignale der Erfassungselemente (1b);
Festlegen der Erfassungsbereiche anhand der Ausgabesignale;
Setzen von Grenzwerten für die Ausgabesignale, wenn sich das Indikatorelement (1a) nicht im festgelegten Erfassungsbereich befindet.

## Claims

1. Sensor assembly (1) for detecting a position (P) of a transmission element (2) provided displaceably on a transmission path (s) parallel to a transmission direction (x1), wherein the sensor assembly (1) has the following:
- an indicator element (1a), which is designed to be provided on the transmission element (2) and is designed to be displaced together with the transmission element (2) parallel to the transmission direction (x1),
- detection elements (1b), which are each designed to output an output signal, which makes it possible to determine the position of the indicator element (1a) at least along a section of the transmission direction (x1), when the indicator element (1a) is located in a detection range of the respective detection element (1b), wherein the detection elements (1b) are arranged spaced apart from one another in the transmission direction (x1) and have at least a first detection element (1b') and a second detection element (1b"), and
- an evaluation unit (4), which is designed to determine the position (P) of the transmission element (2) on the transmission path (s) from the output signals of the detection elements (1b),
wherein the sensor assembly (1) is designed to subject the output signals of the detection elements (1b) to a correction, before the position (P) of the transmission element (2) on the transmission path (s) is determined by the evaluation unit (4),
wherein the sensor assembly (1) is designed such that the output signal of each detection element (1b) is set to a first limit value, when the indicator element (1a) is located outside the detection range of the corresponding detection element (1b) in the transmission direction, and such that the output signal of each detection element (1b) is set to a second limit value, when the indicator element (1a) is located outside the detection range of the corresponding detection element (1b) counter to the transmission direction (x1), wherein the first limit value can be larger or smaller than the second limit value, and
wherein the sensor assembly (1) is designed to add up the output signals of the individual detection elements (1b), whereby an overall signal, which is suitable for determining the position (P) of the transmission element (2) on the transmission path (s), is formed.

2. Sensor assembly (1) according to claim 1, wherein
the first detection element (1b') and the second detection element (1b") each have a detection direction (x2).

3. Sensor assembly (1) according to claim 2, wherein
the detection directions (x2) of the first detection element (1b') and the second detection element (1b") are oriented parallel to one another.

4. Sensor assembly (1) according to any one of the preceding claims, wherein
the detection range of the detection elements (1b) has a linear relationship between the output signal and the position of the indicator element (1a).

5. Sensor assembly (1) according to any one of the preceding claims, wherein
the first detection element (1b') and the second detection element (1b") are designed to interact with the indicator element (1a) according to the Hall principle, in order to output the respective output signal.

6. Sensor assembly (1) according to any one of the preceding claims, wherein
the indicator element (1a) is designed as a magnet, in particular as a ring magnet or as a segment magnet.

7. Sensor assembly (1) according to any one of the preceding claims, wherein
at least one of the detection elements (1b) is designed to output a predetermined output signal, when the indicator element (1a) is located in its detection range.

8. Sensor assembly (1) according to claim 7, wherein
the sensor assembly (1) is designed to detect in which detection range the indicator element (1a) is located on the basis of the predetermined output signal.

9. Sensor assembly (1) according to claim 8, wherein
the sensor assembly (1) is designed to discard or set the output signals of the detection elements (1b) in the detection range of which the indicator element (1b) is not located to a predetermined value.

10. Actuation mechanism with a transmission element (2), which is provided displaceably in a transmission direction (x1), and a sensor assembly (1) according to any one of claims 1 to 9, wherein the indicator element (1a) of the sensor assembly (1) is connected to the transmission element (2) and the transmission element (2) is designed to be displaced along the transmission direction (x1), whereby a device that is operatively connected to the actuation mechanism is actuated.

11. Clutch actuator with a transmission element (2), which is provided displaceably in a transmission direction (x1), and a sensor assembly (1) according to any one of claims 1 to 9, wherein the indicator element (1a) of the sensor assembly (1) is connected to the transmission element (2) and the transmission element (2) is designed to be displaced along the transmission direction (x1), whereby a clutch is actuated.

12. Method for operating a sensor assembly according to any one of claims 1 to 9, with the following steps:
Detecting an indicator element (1a) in a detection range of one of at least two detection elements (1b) in which the indicator element (1a) is located;
Outputting an output signal, which corresponds to the position of the indicator element (1a) within the detection range in which the indicator element (1a) is located;
Correcting the output signals of the detection elements (1b) in the detection ranges of which the indicator element (1a) is not located, by setting these output signals to a predetermined limit value;
Determining the position of the indicator element from the output signals of the individual detection elements and determining a position (P) of a transmission element (2) provided displaceably on a transmission path (s) parallel to a transmission direction (x1) from the position of the indicator element, or
Determining the position (P) of the transmission element (2) provided displaceably on the transmission path (s) parallel to the transmission direction (x1) from the output signals of the individual detection elements.

13. Method according to claim 12, with the following steps for calibrating the sensor assembly:
Moving an indicator element (1a) along the transmission direction (x1) and detecting the output signals of the detection elements (1b),
Establishing the detection ranges on the basis of the output signals,
Setting limit values for the output signals, when the indicator element (1a) is not located in the established detection range.

## Revendications

1. Agencement de capteur (1) pour détecter une position (P) d'un élément de transmission (2) prévu de manière déplaçable sur une ligne de transmission (s) parallèlement à une direction de transmission (x1), dans lequel l'agencement de capteur (1) présente :
- un élément d'indicateur (1a) qui est conçu pour être prévu sur l'élément de transmission (2) et conçu pour être déplacé avec l'élément de transmission (2) parallèlement à la direction de transmission (x1),
- des éléments de détection (1b) qui sont respectivement conçus pour émettre un signal de sortie qui permet de déterminer la position de l'élément d'indicateur (1a) au moins le long d'une section de la direction de transmission (x1) lorsque l'élément d'indicateur (1a) se trouve dans une zone de détection de l'élément de détection respectif (1b), dans lequel les éléments de détection (1b) sont disposés à distance les uns des autres en direction de transmission (x1) et présentent au moins un premier élément de détection (1b') et un second élément de détection (1b") ; et
- une unité d'évaluation (4) qui est conçue pour déterminer la position (P) de l'élément de transmission (2) sur la ligne de transmission (s) à partir des signaux de sortie des éléments de détection (1b),
dans lequel l'agencement de capteur (1) est conçu pour, avant la détermination de la position (P) de l'élément de transmission (2) sur la ligne de transmission (s) par l'unité d'évaluation (4), soumettre les signaux de sortie des éléments de détection (1b) à une correction,
dans lequel l'agencement de capteur (1) est conçu de sorte que le signal de sortie de chaque élément de détection (1b) est réglé sur une première valeur limite lorsque l'élément d'indicateur (1a) se trouve, en direction de transmission, hors de la zone de détection de l'élément de détection correspondant (1b) et que le signal de sortie de chaque élément de détection (1b) est réglé sur une seconde valeur limite lorsque l'élément d'indicateur (1a) se trouve hors de la zone de détection de l'élément de détection correspondant (1b) contre la direction de transmission (x1), dans lequel la première valeur limite peut être supérieure ou inférieure à la seconde valeur limite, et
dans lequel l'agencement de capteur (1) est conçu pour additionner les signaux de sortie des éléments de détection individuels (1b), moyennant quoi un signal total est formé, qui est adapté pour déterminer la position (P) de l'élément de transmission (2) sur la ligne de transmission (s).

2. Agencement de capteur (1) selon la revendication 1, dans lequel
le premier élément de détection (1b') et le second élément de détection (1b") présentent respectivement une direction de détection (x2).

3. Agencement de capteur (1) selon la revendication 2, dans lequel
les directions de détection (x2) du premier élément de détection (1b') et du second élément de détection (1b") sont orientées parallèlement l'une à l'autre.

4. Agencement de capteur (1) selon l'une quelconque des revendications précédentes, dans lequel
la zone de détection des éléments de détection (1b) présente une relation linéaire entre le signal de sortie et la position de l'élément d'indicateur (1a).

5. Agencement de capteur (1) selon l'une quelconque des revendications précédentes, dans lequel
le premier élément de détection (1b') et le second élément de détection (1b") sont conçus pour interagir avec l'élément d'indicateur (1a) selon le principe Hall pour émettre le signal de sortie respectif.

6. Agencement de capteur (1) selon l'une quelconque des revendications précédentes, dans lequel
l'élément d'indicateur (1a) est conçu en tant qu'aimant, en particulier en tant qu'aimant annulaire ou en tant qu'aimant segmenté.

7. Agencement de capteur (1) selon l'une quelconque des revendications précédentes, dans lequel
au moins un des éléments de détection (1b) est conçu pour émettre un signal de sortie prédéfini lorsque l'élément d'indicateur (1a) se trouve dans sa zone de détection.

8. Agencement de capteur (1) selon la revendication 7, dans lequel
l'agencement de capteur (1) est conçu pour reconnaître, à l'aide du signal de sortie prédéfini, dans quelle zone de détection l'élément d'indicateur (1a) se trouve.

9. Agencement de capteur (1) selon la revendication 8, dans lequel
l'agencement de capteur (1) est conçu pour rejeter les signaux de sortie des éléments de détection (1b) dans la zone de détection où l'élément d'indicateur (1b) ne se trouve pas ou pour les régler sur une valeur prédéterminée.

10. Mécanisme d'actionnement avec un élément de transmission (2) qui est prévu de manière déplaçable en direction de transmission (x1), et un agencement de capteur (1) selon l'une quelconque des revendications 1 à 9, dans lequel l'élément d'indicateur (1a) de l'agencement de capteur (1) est connecté à l'élément de transmission (2) et l'élément de transmission (2) est conçu pour être déplacé le long de la direction de transmission (x1), moyennant quoi un dispositif en connexion active avec le mécanisme d'actionnement est actionné.

11. Actionneur d'embrayage avec un élément de transmission (2) qui est prévu de manière déplaçable en direction de transmission (x1), et un agencement de capteur (1) selon l'une quelconque des revendications 1 à 9, dans lequel l'élément d'indicateur (1a) de l'agencement de capteur (1) est connecté à l'élément de transmission (2) et l'élément de transmission (2) est conçu pour être déplacé le long de la direction de transmission (x1), moyennant quoi un embrayage est actionné.

12. Procédé de fonctionnement d'un agencement de capteur selon l'une quelconque des revendications 1 à 9, avec les étapes suivantes :
détection d'un élément d'indicateur (1a) dans une zone de détection d'au moins deux éléments de détection (1b) dans laquelle l'élément d'indicateur (1a) se trouve ;
émission d'un signal de sortie qui correspond à la position de l'élément d'indicateur (1a) dans la zone de détection dans laquelle l'élément d'indicateur (1a) se trouve ;
correction des signaux de sortie des éléments de détection (1b) dans les zones de détection dans lesquelles l'élément d'indicateur (1a) ne se trouve pas, en ce que ces signaux de sortie sont réglés sur une valeur limite prédéterminée ;
détermination de la position de l'élément d'indicateur à partir des signaux de sortie des éléments de détection individuels et détermination d'une position (P) d'un élément de transmission (2) prévu de manière déplaçable sur une ligne de transmission (s) parallèlement à une direction de transmission (x1) à partir de la position de l'élément d'indicateur, ou
détermination de la position (P) de l'élément de transmission (2) prévu de manière déplaçable sur la ligne de transmission (s) parallèlement à la direction de transmission (x1) à partir des signaux de sortie des éléments de détection individuels.

13. Procédé selon la revendication 12, avec les étapes suivantes pour étalonner l'agencement de capteur :
déplacement d'un élément d'indicateur (1a) le long de la direction de transmission (x1) et détection des signaux de sortie des éléments de détection (1b) ;
détermination des zones de détection à l'aide des signaux de sortie ;
définition de valeurs limites pour les signaux de sortie lorsque l'élément d'indicateur (1a) ne se trouve pas dans la zone de détection déterminée.
